# EUROPEAN PATENT SPECIFICATION

(11) **EP 4 419 782 B1**
(45) Date of publication and mention of the grant of the patent: **14.01.2026**
(21) Application number: 22790582.5
(22) Date of filing: 12.10.2022
(51) Int. Cl.: F01M 5/00, F01P 11/08, F28D 9/00, F28F 27/02, F16K 11/065, F16K 31/00, F01P 7/16, F16H 57/04, F28D 21/00

(54) **OIL TEMPERATURE MANAGEMENT ASSEMBLY**
ÖLTEMPERATURVERWALTUNGSANORDNUNG
ENSEMBLE DE GESTION DE TEMPÉRATURE D'HUILE

(30) Priority: 19.10.2021 IT 202100026777
(43) Date of publication of application: 28.08.2024
(73) Proprietor: UFI Innovation Center S.r.l., 38061 Ala (TN) (IT)
(72) Inventor: GIRONDI, Giorgio, 38061 Ala, Trento (IT)
(74) Representative: Gamba, Alessandro
(86) International application number: PCT/IB2022/059784
(87) International publication number: WO 2023/067441

(56) References cited:
- DE-U1- 202021 102 042
- US-A1- 2016 215 664
- US-A1- 2018 299 913
- US-A1- 2020 149 623
- US-A1- 2020 318 919
- US-A1- 2021 325 131

## Description

### Field of application

The present invention relates to an oil temperature management assembly. Preferably, the present invention relates to an oil circulation system comprising said oil temperature management assembly.

In particular, the present invention relates to the automotive field.

In fact, the oil temperature management assembly of the present invention finds specific application in a vehicle with the purpose of regulating the temperature of an operating group of the same vehicle. In particular, an operating group refers to a component or a group of components such as an engine group and/or a transmission group and/or a gearbox group or the like.

Specifically, an oil circulation system is fluidically connected to the operating group and comprising in addition to the oil temperature management assembly, an auxiliary heat exchanger and specific ducts and openings suitable for fluidically connecting the aforesaid components. Embodiments are known in which the auxiliary heat exchanger is an air-oil radiator. Embodiments are also known, in which the auxiliary heat exchanger is a plate heat exchanger.

In particular, the oil temperature management assembly comprises a primary heat exchanger and a support and fluidic connection module. The module has a dual function: to make a fluid connection with said primary heat exchanger and with the auxiliary heat exchanger and to direct the oil towards one or the other component as a function of the temperature thereof entering the module and the pressure thereof.

With particular reference to the aforesaid primary heat exchanger, it should be noted that, in addition to being part of the oil circulation system, it is also fluidically connectable to a vehicle cooling system in which a typically water-based fluid flows.

### Background art

In the background art, solutions of oil temperature management assemblies that are comprised in oil circulation systems are known. Such known oil temperature management assemblies comprise a plate heat exchanger suitable for performing oil temperature regulation operations by heat exchange with a fluid. By means of such a heat exchanger, the oil is subjected to a heat exchange action with the cooling fluid that increases the temperature thereof.

Some known oil temperature management assemblies can be fluidically connected to an auxiliary heat exchanger adapted in turn to perform heat exchange operations with the oil. By means of the auxiliary heat exchanger, the oil is subjected to a heat exchange action which lowers the temperature thereof.

Conversely, embodiments are also known in which the oil heating operations are performed by the auxiliary heat exchanger, while the oil cooling operations are performed by the primary heat exchanger comprised in the oil temperature management assembly.

However, the known solutions of oil temperature management assemblies have particularly complex geometries and layouts, having complex fluid geometries therein, as well as complex fluid connection modes with the ducts of the oil circulation system.

Therefore, in the solutions of the background art, greater complexities of said geometries and of said layouts also entail complex management of the oil flow circulation. A complex fluid management of the oil involves an inefficient and not sudden management of the oil temperature circulating in the operating group with consequent disadvantages to the functioning of the operating group itself.

Furthermore, in the solutions of the background art, the greater complexities of said geometries and said layouts correspond to higher production and manufacturing costs.

In addition, in the solutions of the background art, the greater complexity of said layouts corresponds to specific difficulties in positioning the oil temperature management assembly inside the vehicle: moreover, the need to optimize the occupation of available spaces is particularly felt in the automotive field. Examples of known oil temperature management assemblies having these types of drawbacks are known in documents DE202021102042U1, US2020149623A1, US2016215664A1, US2020318919A1 and US2018299913A1.

### Solution of the invention

Therefore, the need is strongly felt to provide an oil temperature management assembly that solves the aforesaid problems.

The object of the present invention is to provide an oil temperature management assembly that performs the oil temperature adjustment operations in an effective manner, having the simplest possible geometry and layout of the ducts.

Such an object is achieved by means of the oil temperature management assembly claimed in claim 1. The claims dependent thereon show preferred embodiments involving further advantageous aspects. The object is further achieved by the oil circulation system which comprises said oil temperature management assembly claimed in claim 13. The claims dependent thereon show preferred variants implying further advantageous aspects.

### Description of the drawings

Further features and advantages of the invention will become apparent from the description provided below of preferred exemplary embodiments thereof, given by way of non-limiting example, with reference to the accompanying drawings, in which:
- figures 1a, 1b and 1c diagrammatically show some embodiments of an oil circulation system in accordance with the present invention;
- figures 2' and 2" show two perspective views of an oil temperature management assembly, respectively, of the present invention, according to a preferred embodiment;

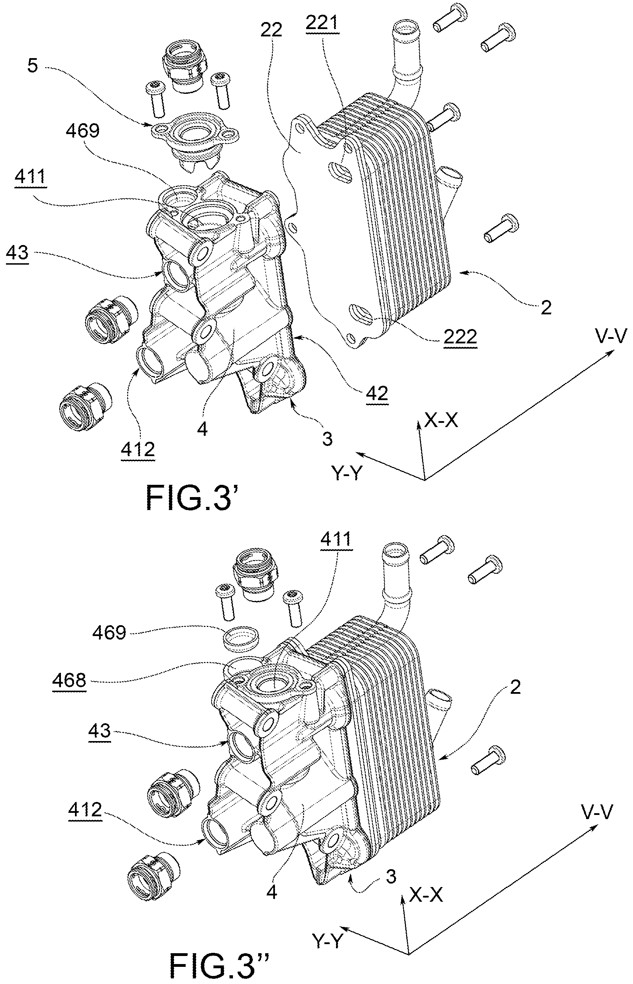

- figures 3' and 3" show two perspective views with separate parts and semi-separate parts, respectively, of the oil temperature management assembly of figures 2' and 2";

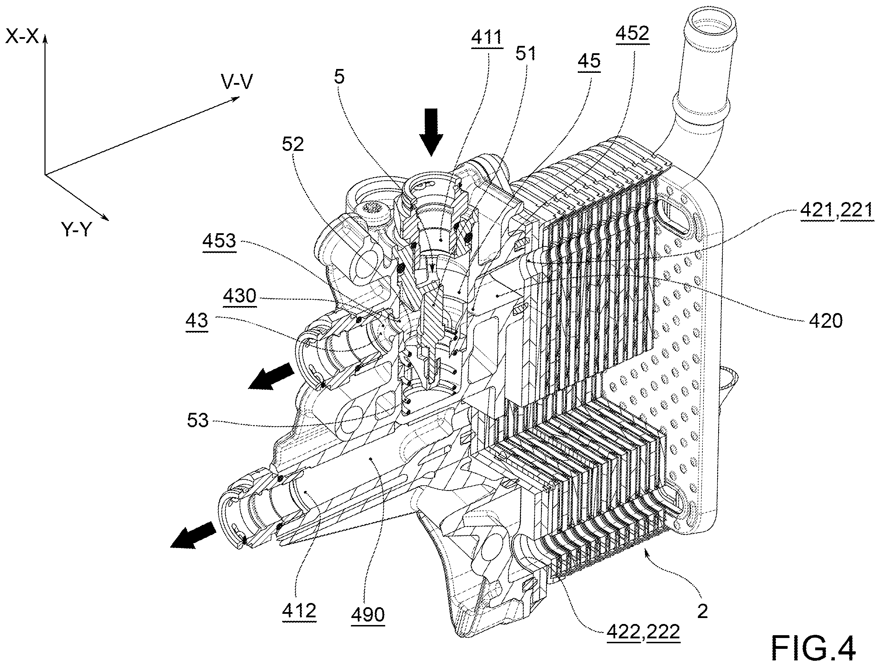

- figure 4 is a sectioned perspective view of the oil temperature management assembly of figures 2' and 2";
- figures 5a and 5b show two partially sectional views of the oil temperature management assembly of figures 2' and 2", comprising a thermostatic valve in a primary configuration and in an auxiliary configuration;

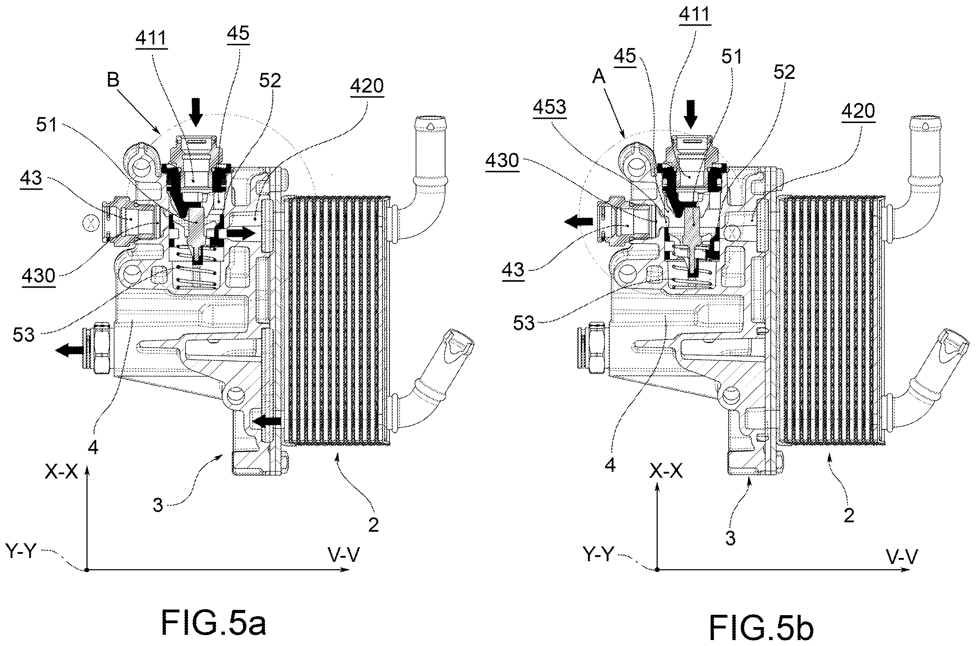

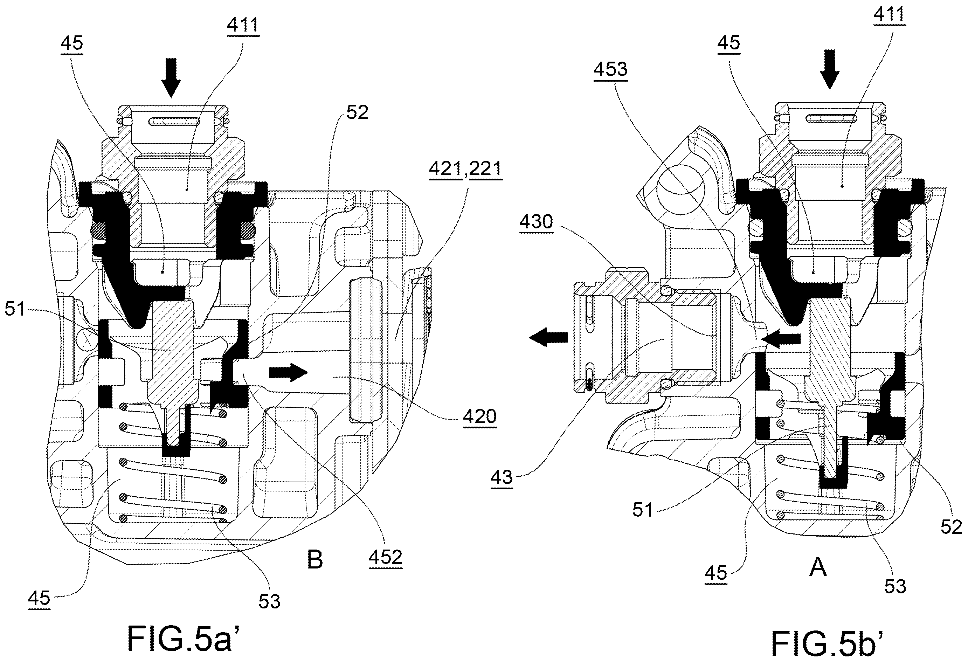

- figures 5a' and 5b' show two enlarged views of the particular thermostatic valve of the oil temperature management assembly of figures 5a and 5b, respectively;

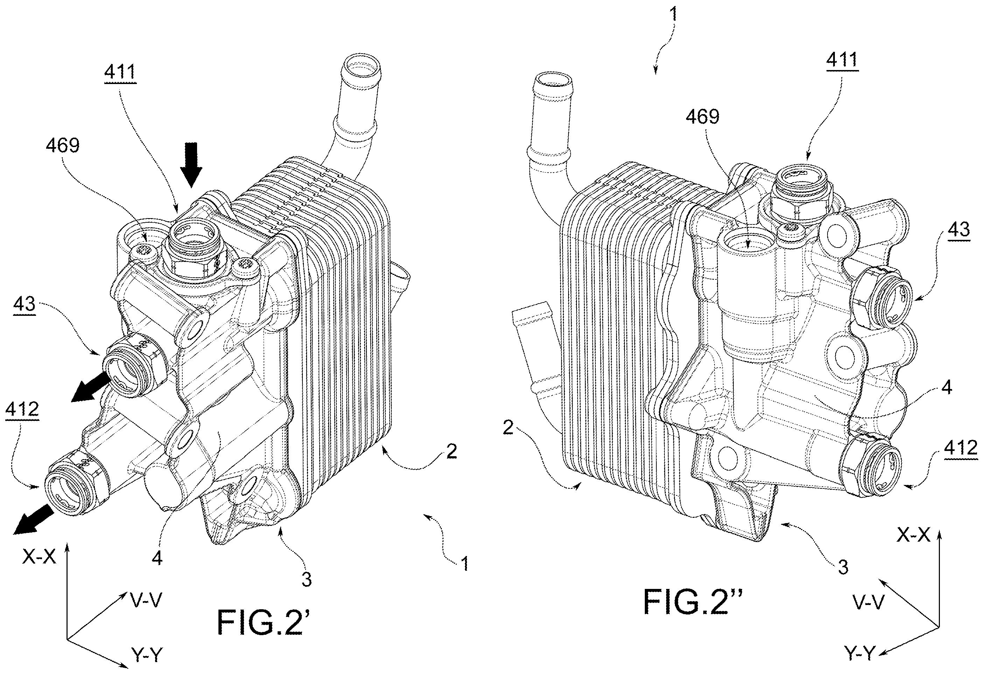

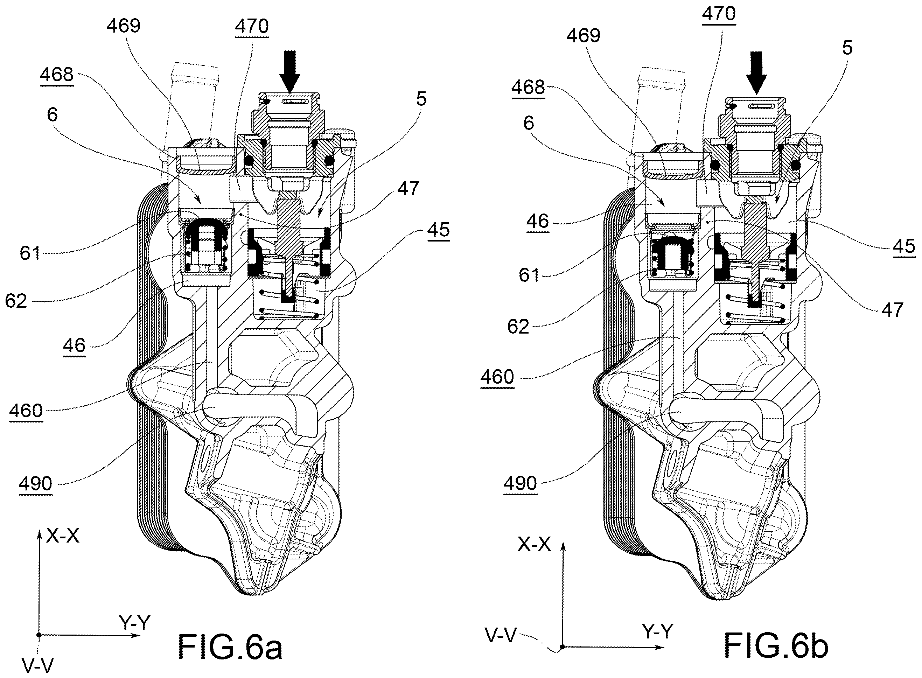

- figures 6a and 6b show two partially sectional views of the oil temperature management assembly of figures 2' and 2", in an embodiment comprising a bypass valve in a closed configuration and in a bypass configuration.

### Detailed description

With reference to the accompanying figures, reference numeral 1 indicates an oil temperature management assembly in accordance with the present invention.

In particular, the oil temperature management assembly of the present invention, as widely described below, is suitable for being part of an oil circulation system of a vehicle with the purpose of managing the oil, in particular the temperature thereof, flowing into an operating group of a vehicle. Preferably, said "operating group" is an engine group, for example with internal combustion or electric or hybrid propulsion, or a transmission group or a gearbox group.

The object of the present invention is also said oil circulation system 900.

Preferably, the oil circulation system comprises an auxiliary heat exchanger 930, the type and features of which do not limit the present invention.

According to a preferred embodiment, said auxiliary heat exchanger 930 is a radiator suitable for performing a heat exchange action between air and oil.

According to a further preferred embodiment, said auxiliary heat exchanger 930 is a plate exchanger suitable for performing a heat exchange action between oil and a second fluid, preferably a water-based liquid.

In this embodiment, the auxiliary heat exchanger 930 is fluidically connectable to a vehicle cooling system in which a further fluid, preferably a water-based liquid, flows.

Preferably, in the embodiment with auxiliary heat exchanger 930 in the form of a plate exchanger, this is (like the primary heat exchanger widely described below) comprised in the oil temperature management assembly 1.

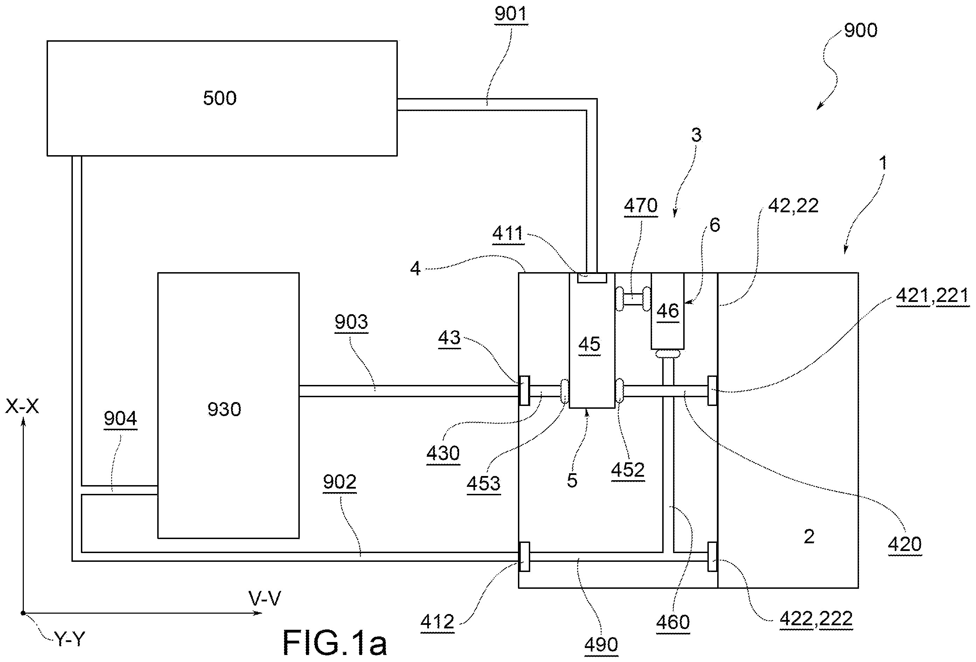

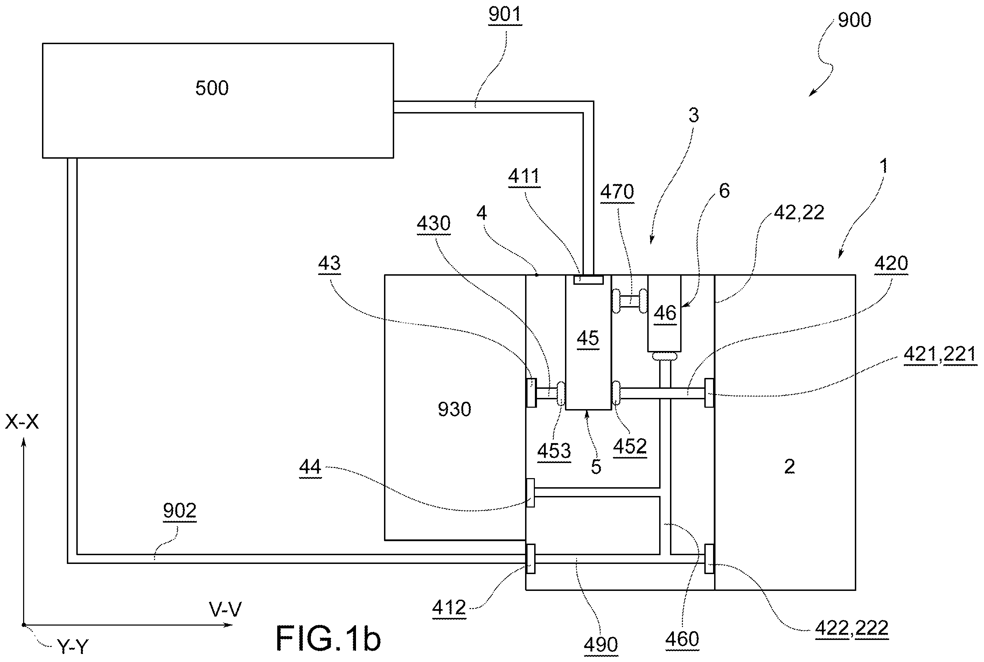

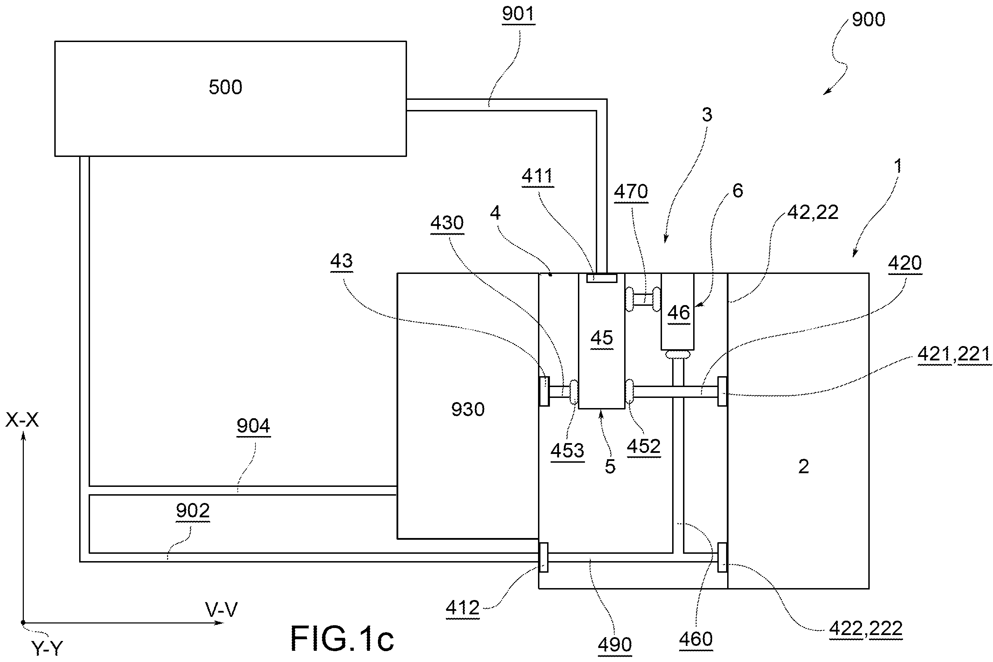

Furthermore, the oil circulation system 900 comprises ducts for connecting the respective groups and/or assemblies, some of which are described below and shown by way of example also in figures 1a, 1b and 1c.

Furthermore, in accordance with a preferred embodiment, the oil temperature management assembly 1 identifies a vertical axis V-V and two longitudinal axes X-X, Y-Y. In particular, the two longitudinal axes X-X, Y-Y lie on the same imaginary plane that is orthogonal to the vertical axis V-V.

In accordance with the present invention, the oil temperature management assembly 1 comprises a primary heat exchanger 2.

Preferably, the primary heat exchanger 2 is a plate heat exchanger. In the configurations described below, oil and a second fluid, for example a water-based liquid, flow in the primary heat exchanger 2.

It should be noted that the use of the terms "primary"/"auxiliary" are used to distinguish the components and/or features and/or operating modes of some components which cooperate with the primary heat exchanger from components and/or features and/or operating modes of some components which cooperate with the auxiliary heat exchanger.

According to a preferred embodiment, "the primary heat exchanger" performs oil heating operations, while "the auxiliary heat exchanger" performs oil cooling operations. In accordance with such a preferred embodiment, "primary" can be replaced with "heating", "auxiliary" can be replaced with "cooling".

However, embodiments are foreseeable in which the primary heat exchanger and the auxiliary heat exchanger operate in inverted positions with respect to what is described in the previous paragraph.

According to a preferred embodiment, the primary heat exchanger 2 comprising, along said vertical axis V-V, a plurality of plates mutually stacked along the vertical axis V-V to define two distinct zones, one in which the oil flows and the other in which the second fluid flows.

According to a preferred embodiment, each zone comprises vertical exchanger ducts and horizontal planar regions.

Preferably, in the primary heat exchanger 2 the horizontal planar regions intended for the circulation of the oil are mutually arranged in parallel.

Preferably, in the primary heat exchanger 2 the horizontal planar regions intended for the circulation of the second fluid are mutually arranged in parallel.

Preferably, the horizontal planar regions intended for the oil circulation are mutually alternated with the planar regions of circulation of the second fluid along the vertical axis V-V.

According to a preferred embodiment, the primary heat exchanger 2 extends in height parallel to the vertical axis V-V. Preferably, said plates have a longitudinal extension with respect to the longitudinal axes X-X, Y-Y.

In accordance with the present invention, the oil temperature management assembly 1 comprises a support and fluidic connection module 3.

According to the present invention, the support and fluidic connection module 3 comprises a module body 4 to which the primary heat exchanger 2 is operatively connected.

In accordance with the present invention, the module body 4 comprises:
- an assembly inlet mouth 411 which is fluidically connectable to a first oil duct 901 of the oil circulation system 900 through which the oil arriving from the operating group 500 flows and an assembly outlet mouth 412 which is fluidically connectable to a second oil duct 902 of the oil circulation system, through which the oil flows towards the operating group 500;
- a primary exchanger inlet mouth 421 and a primary exchanger outlet mouth 422 for the fluid connection of the primary heat exchanger 2 and the module 4, in which the primary exchanger outlet mouth 422 fluidically communicates with the assembly outlet mouth 412;
- an auxiliary mouth 43, which is preferably fluidically connectable to an auxiliary oil duct 903 of the oil circulation system 900, through which the oil flows towards the auxiliary heat exchanger 930.

In accordance with a preferred embodiment, shown by way of example in figure 1a, said auxiliary mouth 43 is fluidically connected to an auxiliary oil duct 903 in fluid connection with the auxiliary heat exchanger 930.

In accordance with a preferred embodiment, shown by way of example in figures 1b and 1c, said auxiliary mouth 43 is fluidically connected directly to the auxiliary heat exchanger 930.

In accordance with a preferred embodiment, said auxiliary heat exchanger 930 is directly fluidically connected to the operating group 500. Preferably, the oil circulation system 900 comprises an auxiliary connecting duct 904 suitable for fluidically connect the auxiliary heat exchanger 930 to the operating group 500.

In accordance with a preferred embodiment, said auxiliary connecting duct 904 is suitable for allowing the return of the conditioned oil from the auxiliary heat exchanger 930 directly to the operating group 500. Preferably, said auxiliary connecting duct 904 is fluidically connected to the second oil duct 902.

In accordance with a preferred embodiment, said auxiliary connecting duct 904 is suitable for allowing the return of the conditioned oil from the auxiliary heat exchanger 930 to the oil temperature management assembly 1.

In accordance with this preferred embodiment, the module body 4 comprises a return mouth 44 in fluidic communication with the auxiliary heat exchanger 930 by means of the auxiliary connecting duct 904.

According to this preferred embodiment, said return mouth 44 is in fluidic communication with the assembly outlet mouth 412.

In accordance with a preferred embodiment, the module body 4 comprises a return mouth 44 in direct fluidic communication with the auxiliary heat exchanger 930. In particular, the return mouth 44 is suitable for allowing the return of the conditioned oil from the auxiliary heat exchanger to the oil temperature management assembly 1.

According to this preferred embodiment, said return mouth 44 is in fluidic communication with the assembly outlet mouth 412.

In accordance with the aforesaid preferred embodiment, the inlet and outlet mouths of the second fluid, for example water, in the primary heat exchanger 2 are on the primary heat exchanger 2 itself. As shown by way of example in the accompanying drawings, in figures 2' to 5b', said inlet and outlet mouths of the second fluid are positioned on the upper plane of the primary heat exchanger 2.

With particular reference to what has been described above, it is emphasized that "mouths" is used to identify the fluid passages for the oil which are suitable for allowing the inlet and outlet of oil from the module body 4.

The diagram shown in figure 1a shows solutions in which the auxiliary heat exchanger 930 is spaced from the oil temperature management assembly 1. Preferably in such solutions the auxiliary heat exchanger 930 is an air/oil radiator.

The diagrams of figures 1b and 1c show two preferred embodiments in which, instead, the auxiliary heat exchanger 930 is fixed to the oil temperature management assembly 1, in particular to the support and fluidic connection module 3. Preferably in such a solution the auxiliary heat exchanger 930 is a plate exchanger. Preferably, the auxiliary heat exchanger 930 is comprised in the oil temperature management assembly 1.

In accordance with the present invention, the support and fluidic connection module 3 further comprises a thermostatic valve 5 housed in the module body 4.

The thermostatic valve 5 is fluidically connected to the assembly inlet mouth 411, to the primary exchanger inlet mouth 421 and to the auxiliary mouth 43.

According to a preferred embodiment, the thermostatic valve 5 is configured to direct the flow of oil between an inlet mouth in fluidic communication with the operating group 500 and two outlet mouths in fluidic communication with the primary heat exchanger 2 and with the auxiliary heat exchanger 930, respectively.

In accordance with the present invention, the thermostatic valve 5 detects the temperature of the oil entering the module 3.

In accordance with a preferred embodiment, the thermostatic valve 5 is fluidically positioned upstream of the primary heat exchanger 2.

In accordance with a preferred embodiment, the thermostatic valve 5 is fluidically positioned upstream of both the primary heat exchanger 2 and the auxiliary heat exchanger 930.

According to a preferred embodiment, the thermostatic valve 5 is positioned in a region closer to the assembly inlet mouth 411 than it is with respect to the assembly outlet mouth 412 and with respect to the primary exchanger inlet mouth 421.

In accordance with the present invention, the thermostatic valve 5 is configurable with respect to a threshold temperature value in a primary configuration in which it directs the oil towards the primary exchanger inlet mouth 421 and in an auxiliary configuration in which it directs the oil towards the auxiliary mouth 43.

In accordance with the present invention, the thermostatic valve 5 is configurable as a function of the oil temperature entering the module 3 in a primary configuration, in which it directs the oil towards the primary exchanger inlet mouth 421, and in an auxiliary configuration, in which directs the oil towards the auxiliary mouth 43.

In other words, the thermostatic valve 5 detects the need to increase the oil temperature or to lower the oil temperature and is arranged in one of the aforesaid configurations.

In accordance with a preferred embodiment, the entire amount of oil that reaches the thermostatic valve 5 is directed towards the primary heat exchanger 2 or towards the auxiliary heat exchanger 930.

According to a preferred embodiment, the thermostatic valve 5 is configurable in one or more intermediate configurations between the two described above, in which the oil flow entering the module is reduced towards the primary exchanger inlet moth 421 and the auxiliary mouth 43.

In accordance with the present invention, the module body 4 comprises a thermostatic valve housing 45 in which the thermostatic valve 5 is housed.

According to a preferred embodiment, said thermostatic valve housing 45 extends in length from the assembly inlet mouth 411. Preferably, said thermostatic valve housing 45 extends longitudinally. Preferably, said thermostatic valve housing 45 extends parallel to a longitudinal extension direction X-X or Y-Y.

In accordance with a preferred embodiment, the thermostatic valve 5 comprises a temperature-sensitive element 51 and a shutter element 52 moved by said temperature-sensitive element 51.

Preferably, the temperature-sensitive element 51 is made in the form of a wax element or in the form of a shape memory spring.

Preferably, the shutter element 52 is moved longitudinally.

Preferably, the shutter element 52 is moved rotationally.

In accordance with a preferred embodiment, the temperature-sensitive element 51 is positioned at least partially between the assembly inlet mouth 411 and the shutter element 52.

In other words, the oil entering from the assembly inlet mouth 411 first encounters the temperature-sensitive element 51 with respect to the shutter element 52.

According to a preferred embodiment, the temperature-sensitive element 51 of the thermostatic valve 5 faces the assembly inlet mouth 411.

According to a preferred embodiment, the thermostatic valve 5 further comprises an elastic element 53 suitable for operating in the opposite direction with respect to the temperature-sensitive element 51. In other words, the temperature-sensitive element 51 must overcome the action of the elastic element 53 to modify the position of the shutter element 52.

Preferably, said elastic element 53 is made in the form of a helical spring.

Preferably, the thermostatic valve 5 is in a position normally corresponding to the primary configuration.

In accordance with a preferred embodiment, the thermostatic valve housing 45 comprises a primary opening 452 and an auxiliary opening 453. In the primary configuration, the shutter 52 is positioned so as to open the primary opening 452 and close the auxiliary opening 453, and, in the auxiliary configuration, the shutter 52 is positioned so as to close the primary opening 452 and open the auxiliary opening 453.

According to a preferred embodiment, in the primary configuration, the shutter 52 is positioned so as to open the primary opening 452 and close the auxiliary opening 453 and, in the auxiliary configuration 453, the shutter 52 is positioned so as to open the primary opening and the auxiliary opening 453.

In accordance with a preferred embodiment, the module body 4 comprises a primary section 420 connecting the primary opening 452 and the primary exchanger inlet mouth 421 and comprises an auxiliary section 430 connecting the auxiliary opening 453 and the auxiliary mouth 43.

In accordance with a preferred embodiment, the primary section 420 and/or the auxiliary section 430 have an extension substantially parallel to the vertical axis V-V.

In accordance with a preferred embodiment, the primary section 420 and/or the auxiliary section 430 have a substantially transverse extension with respect to the housing of the thermostatic valve 45.

Furthermore, according to a preferred embodiment, the module body 4 comprises an outlet section 490 connecting the primary exchanger outlet mouth 422 with the assembly outlet mouth 412.

In accordance with a preferred embodiment, said outlet section 490 extends substantially parallel to the vertical axis V-V.

In accordance with the present invention, moreover, the support and fluidic connection module 3 further comprises a bypass valve 6.

Said bypass valve 6 is in fluidic communication with the inlet mouth 411 and with the thermostatic valve 5.

In accordance with a preferred embodiment, the bypass valve 6 operates in parallel with the thermostatic valve 5. In other words, the thermostatic valve 5 and the bypass valve 6 are arranged in parallel with respect to the circulation direction of the oil entering the module 3.

In particular, the thermostatic valve 5 and the bypass valve 6 are in fluidic communication with the same oil supply mouth, i.e., the assembly inlet mouth 411, and are configured to direct the flow of oil towards respective oil circulation mouths and/or ducts according to the temperature and pressure of the oil entering the module 3.

According to a preferred embodiment, the bypass valve 6 is fluidically connected to the assembly outlet mouth 421.

In accordance with a preferred embodiment, the bypass valve 6 is normally in a closed configuration, in which the oil flows entirely towards the thermostatic valve 5. Furthermore, the bypass valve 6 is configurable in a bypass configuration, when an oil flow having a pressure higher than a threshold pressure value flows, in which the oil flows directly towards the assembly outlet mouth 412.

In accordance with a preferred embodiment, in the bypass configuration the bypass valve 6 puts the assembly inlet mouth 411 in fluidic communication with the assembly outlet mouth 412, directing the flow of oil directly towards the operating group 500 allowing the oil flow to avoid circulation through the primary heat exchanger 2 and the auxiliary heat exchanger 930 when certain pressure conditions persist.

According to a preferred embodiment, the bypass valve 6 avoids the occurrence of an operating condition in which high pressure oil flows into the primary heat exchanger 2 or into the auxiliary heat exchanger 930.

In accordance with a preferred embodiment, the bypass valve 6 comprises a closure element 61 and an elastically yielding element 62.

Preferably, in the bypass configuration the action of the pressure exerted by the oil flow on the closure element 61 overcomes the force of the elastically yielding element 62 by changing the position of the closure element 61.

According to a preferred embodiment, the module body 4 comprises a bypass section 460 connecting the bypass valve 6 to the assembly outlet mouth 412, preferably to the outlet section 490.

According to a preferred embodiment, the bypass section 460 extends substantially in a longitudinal direction.

In accordance with the present invention, the module body 4 comprises a bypass valve housing 46 for housing the bypass valve 6.

In accordance with a preferred embodiment, the bypass section 460 is in fluidic communication with said bypass valve housing 46.

According to a preferred embodiment, the thermostatic valve housing 45 and the bypass valve housing 46 are in fluidic communication by means of a connection passageway 470.

Preferably, said connection passageway 470 is positioned to be proximal to the assembly inlet mouth 411 with respect to the thermostatic valve 5.

According to a preferred embodiment, the thermostatic valve housing 45 and the bypass valve housing 46 are in fluidic communication by means of a connection passageway 470, preferably positioned proximal to the assembly inlet mouth 411 with respect to the shutter element 52 of the thermostatic valve 5.

According to the present invention, the thermostatic valve housing 45 and the bypass valve housing 46 extend parallel to each other.

Preferably, the thermostatic valve housing 45 and the bypass valve housing 46 extend along respective axes oriented substantially parallel.

In accordance with a preferred embodiment, the thermostatic valve housing 45 and the bypass valve housing 46 are mutually separated by a partition wall 47 comprised in the module body 4, in which said connection passageway 470 is obtained in said partition wall 47.

According to a preferred embodiment, said connection passageway 470 is identified by the presence of a recess or a lowering of the partition wall 47 suitable for allowing the fluid connection between the thermostatic valve 5 and the bypass valve 6 or between the respective thermostatic valve housing 45 and bypass valve housing 46.

In other words, according to a preferred embodiment the partition wall 47 extends in height dividing the thermostatic valve housing 45 and the bypass valve housing 46 up to a region proximal to the assembly inlet mouth 411 in which the connection passageway 470 is positioned.

In accordance with a preferred embodiment, the assembly inlet mouth 411 supplies oil to both the thermostatic valve housing 45 and the bypass valve housing 46, in which the thermostatic valve 5 and the bypass valve 6 operate in accordance with what is described above.

Preferably, the thermostatic valve housing 45 and the bypass valve housing 46 are filled with the circulating oil according to the principle of communicating vessels through the connection passageway 470.

In accordance with a preferred embodiment, while the thermostatic valve 5 manages the oil circulation as a function of the temperature, an oil pressure peak detected by the bypass valve 6 allows the management of any overpressure.

In addition, according to a preferred embodiment, the module body 4 comprises a valve insertion hole 468 inside which the bypass valve 6 is insertable. Preferably, the module body 4 comprises a closure plug 469 suitable for closing said insertion hole 460.

According to a preferred embodiment, the module body 4 comprises an insertion hole for the thermostatic valve 5 and an insertion hole for the bypass valve 6. Preferably, the module body 4 comprises a closure plug suitable for close both of the above described insertion holes.

According to a preferred embodiment, the module body 4 comprises a planar module face 42. Preferably, the primary exchanger inlet mouth 421 and the primary exchanger outlet mouth 422 lie on said planar module face 42.

Preferably, the same primary heat exchanger 2 comprises a planar exchanger face 22 on which an inlet opening 221 and an outlet opening 222 lie, facing the primary exchanger inlet mouth 421 and the primary exchanger outlet mouth 422, respectively. Preferably, the vertical ducts of the zone into which the oil flows extend vertically from said inlet opening 221 and from said outlet opening 222.

In accordance with a preferred embodiment, the module body 4 comprises respective gaskets surrounding the primary exchanger inlet mouth 421 and the primary exchanger outlet mouth 422 to allow the fluid coupling of the primary heat exchanger 2 to the module body 4.

According to a preferred embodiment, the module body 4 is a monolithic body made of aluminum alloy by casting or die casting.

According to a preferred embodiment, the module body 4 is a monolithic body made of plastic material by an injection molding process.

In accordance with a preferred embodiment, the base plate of the primary heat exchanger 2 has special slots crossable by screws for fastening the primary heat exchanger 2 to the module body 4.

According to a preferred embodiment, the primary heat exchanger 2 and the module body 4 is fixable by brazing.

In accordance with a preferred embodiment, the auxiliary heat exchanger 930 interfaces with the module body 4 in accordance with the methods described above for the connection of the module body 4 to the primary heat exchanger 2.

Preferably, in the tables shown by way of example, the module body 4 comprises specific fittings positioned at the assembly inlet mouth 411, the assembly outlet mouth 412 and the auxiliary mouth 43 to facilitate the engagement with the first oil duct 901, with the second oil duct 902 and with the cooling duct 903.

Innovatively, the oil temperature management assembly amply fulfills the object of the present invention by overcoming the typical problems of the known art.

Advantageously, in fact, the oil temperature management assembly has a particularly simple layout in the "fluid part" thereof and in the fluid connections thereof with the respective operating group.

Advantageously, the oil temperature management assembly is suitable for detecting the entering oil temperature in a precise and timely manner by performing a timely management of the oil towards the heating thereof, i.e., towards the primary heat exchanger, or towards the auxiliary heat exchanger, i.e., towards the radiator.

Advantageously, the oil temperature management assembly has optimized fluid paths inside the module body, resulting extremely efficient in reducing the pressure drops imposed on the oil circulation system and associated with the operation of the oil temperature management assembly.

Advantageously, the positioning of the thermostatic valve upstream of the primary exchanger and of the auxiliary exchanger allows to reduce the number of circulation mouths and ducts inside the module body, simplifying the structure thereof, production process and the costs associated with the manufacture thereof.

Advantageously, the positioning of the thermostatic valve upstream of the primary exchanger and of the auxiliary exchanger allows to reduce the number of openings and the length of the system circulation ducts, reducing the pressure drops imposed on the oil circulation system associated with the operation of the oil temperature management assembly.

Advantageously, the presence of the bypass valve and the positioning of the bypass valve allow both the primary heat exchanger and the auxiliary heat exchanger to be fluidically bypassed, i.e., in both "heating" and "cooling" conditions, preserving these components from unwanted overpressures for the entire set of operating conditions foreseen by the oil temperature management assembly.

Advantageously, the presence and positioning of the bypass valve allows the thermostatic valve, the primary heat exchanger and the auxiliary heat exchanger to be bypassed in both "heating" and "cooling" conditions, ensuring a rapid response to pressure and temperature changes, managing the circulation of the oil to and from the operating group in an extremely optimized manner.

Advantageously, the mutual positioning of the thermostatic valve and of the bypass valve allow an extremely functional and effective mutual operation.

Advantageously, the thermostatic valve and the bypass valve communicate with the same oil supply opening resulting extremely reactive and ready in detecting and managing the oil circulation as a function of both the temperature and pressure thereof.

Advantageously, the mutual positioning of the thermostatic valve and the bypass valve allows the creation of an oil management assembly capable of controlling the oil circulation both as a function of temperature and as a function of pressure using two valves installed in respective housings, in which each valve has a simple and cost-effective structure.

Advantageously, the use of control valves with a simple structure, installed in respective housings in fluidic communication allows increasing the reliability of the temperature management assembly, minimizing the risks of possible malfunctions of the operating group and the circulation system.

Advantageously, the presence of a thermostatic valve housing in communication with a bypass valve housing allows to integrate both the temperature control and the pressure control on the management assembly avoiding the use of multifunction valves installable in a single housing and characterized by a complex structure and high production costs.

Advantageously, the oil temperature management assembly ensures a high maximization of the exploitation of the spaces in the vehicle. Advantageously, the oil temperature management assembly is particularly flexible in the application thereof, for example allowing the designer to fully exploit the free spaces in the vehicle.

It is apparent that, in order to meet contingent needs, those skilled in the art may make changes to the above-described oil temperature management assembly, all contained within the scope of protection as defined by the following claims.

### Reference numeral list:

1 oil temperature management assembly
2 primary heat exchanger
22 planar exchanger face
221 inlet opening
222 outlet opening
3 support and fluidic connection module
4 module body
411 assembly inlet mouth
412 assembly outlet mouth
42 planar module face
420 primary section
421 primary exchanger inlet mouth
422 primary exchanger outlet mouth
43 auxiliary mouth
44 return mouth
430 auxiliary section
45 thermostatic valve housing
452 primary opening
453 auxiliary opening
46 bypass valve housing
460 bypass section
468 valve insertion hole
469 closure plug
47 partition wall
470 connection passageway
5 thermostatic valve
51 temperature-sensitive element
52 shutter element
53 elastic element
6 bypass valve
61 closing element
62 elastically yielding element
500 operating group
900 oil circulation system
901 first oil duct
902 second oil duct
903 auxiliary oil duct
904 auxiliary connection duct
930 auxiliary heat exchanger
X-X, Y-Y longitudinal axes
V-V vertical axis

## Claims

1. An oil temperature management assembly (1) fluidically connectable to an oil circulation system (900) of an operating group of a vehicle (500), for example an engine group or a transmission group or a gearbox group, wherein said oil circulation system (900) comprises an auxiliary heat exchanger (930), wherein the oil temperature management assembly (1) comprises a primary heat exchanger (2) and a fluidic support and connection module (3) comprising:
i) a module body (4), to which the primary heat exchanger (2) is operatively connected, comprising:
- an assembly inlet mouth (411) fluidically connectable to a first oil duct (901) of the oil circulation system (900) through which the oil arriving from the operating group (500) flows and an assembly outlet mouth (412) fluidically connectable to a second oil duct (902) of the oil circulation system through which the oil flows towards the operating group (500);
- a primary exchanger inlet mouth (421) and a primary exchanger outlet mouth (422) for the fluidic connection of the primary heat exchanger (2) and the module (3), wherein the primary exchanger outlet mouth (422) fluidically communicates with the assembly outlet mouth (412);
- an auxiliary mouth (43), which is preferably fluidically connectable to an auxiliary oil duct (903) of the oil circulation system (900), in which the oil flows towards the auxiliary heat exchanger (930);
ii) a thermostatic valve (5) housed in the module body (4), in a thermostatic valve housing (45), fluidically connected to the assembly inlet mouth (411), the primary exchanger inlet mouth (421) and the auxiliary mouth (43), wherein the thermostatic valve (5) detects the temperature of the oil entering the module (3) and is configurable with respect to a threshold temperature value in a primary configuration in which it directs the oil towards the primary exchanger inlet mouth (421) and in an auxiliary configuration in which it directs the oil towards the auxiliary mouth (43);
iii) a bypass valve (6), housed in the module body (4), in a bypass valve housing (46), fluidically connected to the assembly inlet mouth (411) and the thermostatic valve (5), wherein the bypass valve (6) is fluidically connected to the assembly outlet mouth (421), wherein the bypass valve (6) is normally in a closed configuration in which the oil flows entirely towards the thermostatic valve (5) and is configurable in a bypass configuration, when an oil flow having a pressure greater than a threshold pressure value flows, in which the oil flows directly towards the assembly outlet mouth (412);
wherein the oil temperature management assembly (1) is **characterized in that** the thermostatic valve housing (45) and the bypass valve housing (46) extend parallel to each other.

2. Oil temperature management assembly (1) according to claim 1, wherein the thermostatic valve (5) and the bypass valve (6) operate as a function of the oil temperature and the oil pressure at the inlet of the module (3), respectively.

3. Oil temperature management assembly (1) according to any one of the preceding claims, wherein the thermostatic valve housing (45) and the bypass valve housing (46) are in fluidic communication by means of a connection passageway (470), preferably positioned proximal to the assembly inlet mouth (411) with respect to the thermostatic valve (5).

4. Oil temperature management assembly (1) according to any one of the preceding claims, wherein the thermostatic valve (5) comprises a temperature-sensitive element (51) and a shutter element (52) moved by said temperature-sensitive element (51), wherein the temperature-sensitive element (51) is positioned at least partially between the assembly inlet mouth (411) and the shutter element (52).

5. Oil temperature management assembly (1) according to claim 4, wherein the thermostatic valve housing (45) comprises a primary opening (452) and an auxiliary opening (453), wherein in the primary configuration the shutter (52) is positioned so as to open the primary opening (452) and close the auxiliary opening (453), and wherein in the auxiliary configuration the shutter (52) is positioned so as to close the primary opening (452) and open the auxiliary opening (453), wherein the connection passageway (470) is positioned closer to the assembly inlet mouth (411) with respect to both the primary opening (452) and the auxiliary opening (453).

6. Oil temperature management assembly (1) according to any one of the preceding claims, wherein the module body (4) comprises a partition wall (47) separating the thermostatic valve housing (45) and the bypass valve housing (46), wherein the connection passageway (470) is obtained in said partition wall (47).

7. Oil temperature management assembly (1) according to any one of the preceding claims, wherein the module body (4) comprises a valve insertion hole (468) in which the bypass valve (6) is insertable, comprising a closure plug (469) suitable for closing said insertion hole (460).

8. Oil temperature management assembly (1) according to any one of the preceding claims, comprising a vertical axis (V-V) and two longitudinal axes (X-X; Y-Y) lying mutually orthogonal to one another, wherein the primary heat exchanger (2) extends vertically parallel to said vertical axis (V-V), wherein the thermostatic valve (5) extends substantially parallel to a longitudinal axis (X-X; Y-Y).

9. Oil temperature management assembly (1) according to claim 8, wherein the module body (4) comprises a primary section (420) connecting the primary opening (452) and the primary exchanger inlet mouth (421) and comprises an auxiliary section (430) connecting the auxiliary opening (453) and the auxiliary mouth (43), wherein both the primary section (420) and the auxiliary section (430) extend substantially parallel to the vertical axis (V-V).

10. Oil temperature management assembly (1) according to claims 8 or claim 9, wherein the module body (4) comprises an outlet section (490) connecting the primary exchanger outlet mouth (422) to the assembly outlet mouth (412), wherein said outlet section (490) extends substantially parallel to the vertical axis (V-V).

11. Oil temperature management assembly (1) according to any one of the preceding claims, wherein the module body (4) comprises a bypass section (460) connecting the bypass valve (6) to the assembly outlet mouth (412), preferably to the outlet section (490).

12. Oil temperature management assembly (1) according to any one of the preceding claims, wherein the module body (4) comprises a planar module face (42) on which the exchanger inlet mouth (421) and the exchanger outlet mouth (422) are obtained, wherein the primary heat exchanger (2) is preferably sealingly fixed to said planar module face (42).

13. Oil circulation system (900) of an operating group of a vehicle (500), for example an engine group or a transmission group or a gearbox group, wherein said oil circulation system (900) comprises an auxiliary heat exchanger (930) and a temperature management assembly (1) according to any one of the preceding claims.

## Patentansprüche

1. Öltemperaturverwaltungsanordnung (1), die in Fluidverbindung mit einem Ölumlaufsystem (900) einer Betriebsgruppe eines Fahrzeugs (500) gebracht werden kann, beispielsweise einer Motorgruppe oder einer Antriebsgruppe oder eine Getriebegruppe, wobei das Ölumlaufsystem (900) einen Hilfswärmetauscher (930) umfasst, wobei die Öltemperaturverwaltungsanordnung (1) einen Primärwärmetauscher (2) und ein fluidisches Träger- und Verbindungsmodul (3) umfasst, umfassend:
i) einen Modulkörper (4), mit dem der Primärwärmetauscher (2) operativ verbunden ist, umfassend:
- eine Anordnung-Einlassmündung (411), die in Fluidverbindung mit einer ersten Ölleitung (901) des Ölumlaufsystems (900) gebracht werden kann, durch die das Öl, das von der Betriebsgruppe (500) kommt, strömt, und eine Anordnung-Auslassmündung (412), die in Fluidverbindung mit einer zweiten Ölleitung (902) des Ölumlaufsystems gebracht werden kann, durch die das Öl zu der Betriebsgruppe (500) strömt;
- eine Primärtauscher-Einlassmündung (421) und eine Primärtauscher-Auslassmündung (422) für die Fluidverbindung des Primärwärmetauschers (2) und des Moduls (3), wobei die Primärtauscher-Auslassmündung (422) in Fluidverbindung mit der Anordnung-Auslassmündung (412) steht;
- eine zusätzliche Mündung (43), die vorzugsweise in Fluidverbindung mit einer Hilfsölleitung (903) des Ölumlaufsystems (900) gebracht werden kann, in dem das Öl zu dem Hilfswärmetauschers (930) strömt;
ii) ein Thermostatventil (5), das in dem Modulkörper (4) in einem Thermostatventilgehäuse (45) aufgenommen wird und in Fluidverbindung mit der Anordnung-Einlassmündung (411), der Primärtauscher-Einlassmündung (421) und der Hilfsmündung (43) steht, wobei das Thermostatventil (5) die Temperatur des Öls, das in das Modul (3) eintritt, erkennt und in Bezug auf einen Temperatur-Schwellwert in einer Primärkonfiguration, in der es das Öl zu der Einlassmündung des Primärtauschers (421) leitet, und in einer Hilfskonfiguration, in der es das Öl zu der Hilfsmündung (43) leitet, konfiguriert werden kann;
iii) ein Bypass-Ventil (6), das in dem Modulkörper (4) in einem Bypass-Ventilgehäuse (46) aufgenommen wird und in Fluidverbindung mit der Anordnung-Einlassmündung (411) und dem Thermostatventil (5) steht, wobei das Bypass-Ventil (6) in Fluidverbindung mit der Anordnung-Auslassmündung (421) steht, wobei sich das Bypass-Ventil (6) normalerweise in einer geschlossenen Konfiguration befindet, in der das Öl vollständig zu dem Thermostatventil (5) strömt, und in einer Bypass-Konfiguration konfiguriert werden kann, wenn ein Ölstrom mit aufweisend einen Druck, der größer als ein Druckschwellwert ist, strömt, in der das Öl direkt zu der Anordnung- Auslassmündung (412) strömt;
wobei die Öltemperaturverwaltungsanordnung (1) **dadurch gekennzeichnet ist, dass** sich das Thermostatventilgehäuse (45) und das Bypass-Ventilgehäuse (46) parallel zueinander erstrecken.

2. Öltemperaturverwaltungsanordnung (1) nach Anspruch 1, wobei das Thermostatventil (5) und das Bypass-Ventil (6) jeweils in Abhängigkeit von der Öltemperatur bzw. dem Öldruck an dem Einlass des Moduls (3) arbeiten.

3. Öltemperaturverwaltungsanordnung (1) nach einem der vorstehenden Ansprüche, wobei das Thermostatventilgehäuse (45) und das Bypass-Ventilgehäuse (46) in Fluidkommunikation miteinander über einen Verbindungsdurchgang (470) stehen, der vorzugsweise proximal der Anordnung-Einlassmündung (411) in Bezug auf das Thermostatventil (5) positioniert ist.

4. Öltemperaturverwaltungsanordnung (1) nach einem der vorstehenden Ansprüche, wobei das Thermostatventil (5) ein temperaturempfindliches Element (51) und ein Verschlusselement (52) umfasst, das durch das temperaturempfindliche Element (51) bewegt wird, wobei das temperaturempfindliche Element (51) mindestens teilweise zwischen der Anordnung-Einlassmündung (411) und dem Verschlusselement (52) angeordnet ist.

5. Öltemperaturverwaltungsanordnung (1) nach Anspruch 4, wobei das Thermostatventilgehäuse (45) eine Primäröffnung (452) und eine Hilfsöffnung (453) umfasst, wobei in der Primärkonfiguration das Verschlusselement (52) positioniert ist, sodass es die Primäröffnung (452) öffnet und die Hilfsöffnung (453) verschließt, und wobei in der Hilfskonfiguration das Verschlusselement (52) positioniert ist, sodass es die Primäröffnung (452) verschließt und die Hilfsöffnung (453) öffnet, wobei der Verbindungsdurchgang (470) mehr in der Nähe der Anordnung-Einlassmündung (411) in Bezug auf sowohl die Primäröffnung (452) als auch die Hilfsöffnung (453), positioniert ist.

6. Öltemperaturverwaltungsanordnung (1) nach einem der vorhergehenden Ansprüche, wobei der Modulkörper (4) eine Trennwand (47) umfasst, die das Thermostatventilgehäuse (45) und das Bypass-Ventilgehäuse (46) voneinander trennt, wobei der Verbindungsdurchgang (470) in dieser Trennwand (47) ausgebildet ist.

7. Öltemperaturverwaltungsanordnung (1) nach einem der vorhergehenden Ansprüche, wobei der Modulkörper (4) eine Ventileinführungsbohrung (468) umfasst, in die das Bypass-Ventil (6) eingeführt werden kann, umfassend einen Verschluss (469), der geeignet ist, die Einführungsbohrung (460) zu verschließen.

8. Öltemperaturverwaltungsanordnung (1) nach einem der vorhergehenden Ansprüche, umfassend eine Vertikalachse (V-V) und zwei Längsachsen (X-X; Y-Y), die sich orthogonal zueinander befinden, wobei der Primärwärmetauscher (2) sich vertikal parallel zu der Vertikalachse (V-V) erstreckt, wobei das Thermostatventil (5) sich im Wesentlichen parallel zu einer Längsachse (X-X; Y-Y) erstreckt.

9. Öltemperaturverwaltungsanordnung (1) nach Anspruch 8, wobei der Modulkörper (4) einen Primärabschnitt (420) umfasst, der die Primäröffnung (452) und die Primärtauscher-Einlassmündung (421) verbindet, und einen Hilfsabschnitt (430) umfasst, der die Hilfsmündung (453) und die Hilfsöffnung (43) verbindet, wobei sich sowohl der Primärabschnitt (420) als auch der Hilfsabschnitt (430) im Wesentlichen parallel zu der Vertikalachse (V-V) erstrecken.

10. Öltemperaturverwaltungsanordnung (1) nach Anspruch 8 oder 9, wobei der Modulkörper (4) einen Auslassabschnitt (490) umfasst, der die Primärtauscher-Auslassmündung (422) mit der Anordnung-Auslassmündung(412) verbindet, wobei sich der Auslassabschnitt (490) im Wesentlichen parallel zu der Vertikalachse (V-V) erstreckt.

11. Öltemperaturverwaltungsanordnung (1) nach einem der vorhergehenden Ansprüche, wobei der Modulkörper (4) einen Bypass-Abschnitt (460) umfasst, der das Bypass-Ventil (6) mit der Anordnung-Auslassmündung (412) verbindet, vorzugsweise mit dem Auslassabschnitt (490).

12. Öltemperaturverwaltungsanordnung (1) nach einem der vorhergehenden Ansprüche, wobei der Modulkörper (4) eine plane Modulfläche (42) umfasst, auf der die Tauscher-Einlassmündung (421) und die Tauscher-Auslassmündung (422) erhalten sind, wobei der Primärwärmetauscher (2) vorzugsweise dichtend an der planen Modulfläche (42) befestigt wird.

13. Ölumlaufsystem (900) einer Betriebsgruppe eines Fahrzeugs (500), beispielsweise einer Motorgruppe oder einer Antriebsgruppe oder einer Getriebegruppe, wobei das Ölumlaufsystem (900) einen Hilfswärmetauscher (930) und eine Temperaturverwaltungsanordnung (1) nach einem der vorhergehenden Ansprüche umfasst.

## Revendications

1. Un ensemble de gestion de température d'huile (1) raccordable fluidiquement à un système de circulation d'huile (900) d'un groupe opératif d'un véhicule (500), par exemple un groupe moteur ou un groupe de transmission ou un groupe de boîte de vitesses, dans lequel ledit système de circulation d'huile (900) comprend un échangeur de chaleur auxiliaire (930), dans lequel l'ensemble de gestion de température d'huile (1) comprend un échangeur de chaleur primaire (2) et un module de support et de connexion fluidique (3) comprenant :
i) un corps de module (4), auquel l'échangeur de chaleur primaire (2) est relié de manière opérative, comprenant :
- une bouche d'entrée de l'ensemble (411) raccordable fluidiquement à un premier conduit d'huile (901) du système de circulation d'huile (900) à travers lequel circule l'huile provenant du groupe opératif (500), et une bouche de sortie de l'ensemble (412) raccordable fluidiquement à un second conduit d'huile (902) du système de circulation d'huile à travers lequel l'huile circule vers le groupe opératif (500) ;
- une bouche d'entrée de l'échangeur primaire (421) et une bouche de sortie de l'échangeur primaire (422) pour la connexion fluidique de l'échangeur de chaleur primaire (2) et du module (3), la bouche de sortie de l'échangeur primaire (422) communiquant fluidiquement avec la bouche de sortie de l'ensemble (412) ;
- une bouche auxiliaire (43), qui est de préférence raccordable fluidiquement à un conduit d'huile auxiliaire (903) du système de circulation d'huile (900), dans lequel l'huile circule vers l'échangeur de chaleur auxiliaire (930) ;
ii) une valve thermostatique (5) logée dans le corps de module (4), dans un logement de valve thermostatique (45), raccordé fluidiquement à la bouche d'entrée de l'ensemble (411), à la bouche d'entrée de l'échangeur primaire (421) et à la bouche auxiliaire (43), la valve thermostatique (5) détectant la température de l'huile entrant dans le module (3) et étant configurable par rapport à une valeur de température seuil dans une configuration primaire dans laquelle elle dirige l'huile vers la bouche d'entrée de l'échangeur primaire (421) et dans une configuration auxiliaire dans laquelle elle dirige l'huile vers la bouche auxiliaire (43) ;
iii) une valve de dérivation (6), logée dans le corps de module (4), dans un logement de valve de dérivation (46), raccordée fluidiquement à la bouche d'entrée de l'ensemble (411) et à la valve thermostatique (5), la valve de dérivation (6) étant raccordée fluidiquement à la bouche de sortie de l'ensemble (421), la valve de dérivation (6) étant normalement dans une configuration fermée dans laquelle l'huile s'écoule entièrement vers la valve thermostatique (5) et étant configurable dans une configuration de dérivation, lorsqu'un flux d'huile ayant une pression supérieure à une valeur de pression seuil circule, dans laquelle l'huile s'écoule directement vers la bouche de sortie de l'ensemble (412) ;
dans lequel l'ensemble de gestion de température d'huile (1) est **caractérisé en ce que** le logement de valve thermostatique (45) et le logement de valve de dérivation (46) s'étendent parallèlement l'un à l'autre.

2. Ensemble de gestion de température d'huile (1) selon la revendication 1, dans lequel la valve thermostatique (5) et la valve de dérivation (6) fonctionnent en fonction de la température de l'huile et de la pression de l'huile à l'entrée du module (3), respectivement.

3. Ensemble de gestion de température d'huile (1) selon l'une quelconque des revendications précédentes, dans lequel le logement de valve thermostatique (45) et le logement de valve de dérivation (46) sont en communication fluidique au moyen d'un passage de connexion (470), de préférence positionné proximalement à la bouche d'entrée de l'ensemble (411) par rapport à la valve thermostatique (5).

4. Ensemble de gestion de température d'huile (1) selon l'une quelconque des revendications précédentes, dans lequel la valve thermostatique (5) comprend un élément sensible à la température (51) et un élément obturateur (52) déplacé par ledit élément sensible à la température (51), l'élément sensible à la température (51) étant positionné au moins partiellement entre la bouche d'entrée de l'ensemble (411) et l'élément obturateur (52).

5. Ensemble de gestion de température d'huile (1) selon la revendication 4, dans lequel le logement de valve thermostatique (45) comprend une ouverture primaire (452) et une ouverture auxiliaire (453), dans laquelle, dans la configuration primaire, l'obturateur (52) est positionné de manière à ouvrir l'ouverture primaire (452) et à fermer l'ouverture auxiliaire (453), et dans laquelle, dans la configuration auxiliaire, l'obturateur (52) est positionné de manière à fermer l'ouverture primaire (452) et à ouvrir l'ouverture auxiliaire (453), le passage de connexion (470) étant positionné plus près de la bouche d'entrée de l'ensemble (411) par rapport tant à l'ouverture primaire (452) qu'à l'ouverture auxiliaire (453).

6. Ensemble de gestion de température d'huile (1) selon l'une quelconque des revendications précédentes, dans lequel le corps du module (4) comprend une paroi de séparation (47) séparant le logement de valve thermostatique (45) et le logement de valve de dérivation (46), le passage de connexion (470) étant obtenu dans ladite paroi de séparation (47).

7. Ensemble de gestion de température d'huile (1) selon l'une quelconque des revendications précédentes, dans lequel le corps du module (4) comprend un trou d'insertion de valve (468) dans lequel la valve de dérivation (6) est insérable, comprenant un bouchon de fermeture (469) adapté pour fermer ledit trou d'insertion (460).

8. Ensemble de gestion de température d'huile (1) selon l'une quelconque des revendications précédentes, comprenant un axe vertical (V-V) et deux axes longitudinaux (X-X ; Y-Y) disposés orthogonalement l'un à l'autre, dans lequel l'échangeur de chaleur primaire (2) s'étend verticalement parallèlement audit axe vertical (V-V), dans lequel la valve thermostatique (5) s'étend sensiblement parallèlement à un axe longitudinal (X-X ; Y-Y).

9. Ensemble de gestion de température d'huile (1) selon la revendication 8, dans lequel le corps du module (4) comprend une section primaire (420) reliant l'ouverture primaire (452) et la bouche d'entrée de l'échangeur primaire (421) et comprend une section auxiliaire (430) reliant l'ouverture auxiliaire (453) et la bouche auxiliaire (43), dans lequel tant la section primaire (420) que la section auxiliaire (430) s'étendent sensiblement parallèlement à l'axe vertical (V-V).

10. Ensemble de gestion de température d'huile (1) selon les revendications 8 ou 9, dans lequel le corps du module (4) comprend une section de sortie (490) reliant la bouche de sortie de l'échangeur primaire (422) à la bouche de sortie de l'ensemble (412), ladite section de sortie (490) s'étendant sensiblement parallèlement à l'axe vertical (V-V).

11. Ensemble de gestion de température d'huile (1) selon l'une quelconque des revendications précédentes, dans lequel le corps du module (4) comprend une section de dérivation (460) reliant la valve de dérivation (6) à la bouche de sortie de l'ensemble (412), de préférence à la section de sortie (490).

12. Ensemble de gestion de température d'huile (1) selon l'une quelconque des revendications précédentes, dans lequel le corps du module (4) comprend une face plane de module (42) sur laquelle sont obtenues la bouche d'entrée de l'échangeur (421) et la bouche de sortie de l'échangeur (422), dans lequel l'échangeur de chaleur primaire (2) est de préférence fixé de manière étanche à ladite face plane de module (42).

13. Système de circulation d'huile (900) d'un groupe opératif d'un véhicule (500), par exemple un groupe moteur ou un groupe de transmission ou un groupe de boîte de vitesses, dans lequel ledit système de circulation d'huile (900) comprend un échangeur de chaleur auxiliaire (930) et un ensemble de gestion de température (1) selon l'une quelconque des revendications précédentes.
